Europäisches Patentamt

European Patent Office

Office européen des brevets

(19)

(11) **EP 1 276 073 A2**

(12) **EUROPÄISCHE PATENTANMELDUNG**

(43) Veröffentlichungstag:
    **15.01.2003 Patentblatt 2003/03**

(51) Int Cl.⁷: **G06K 11/18**, G06F 3/033

(21) Anmeldenummer: **02013065.4**

(22) Anmeldetag: **13.06.2002**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **04.07.2001 DE 10132243**

(71) Anmelder: **FRAUNHOFER-GESELLSCHAFT ZUR
    FÖRDERUNG DER
    ANGEWANDTEN FORSCHUNG E.V.
    80636 München (DE)**

(72) Erfinder:
    • **Häfner, Ulrich, Dipl.-Ing.
      71665 Vaihingen (DE)**
    • **Rössler, Andreas, Dipl.-Ing.
      70563 Stuttgart (DE)**

(74) Vertreter: **Pfenning, Meinig & Partner
    Mozartstrasse 17
    80336 München (DE)**

(54) **Kabelloses Interaktionssystem für Anwendungen der virtuellen Realität**

(57)    Die Erfindung betrifft eine handgehaltene, kabellose Eingabevorrichtung zur Erzeugung und Übermittlung von Orts-, Lage- und/oder Bewegungsdaten zur Navigation und Manipulation in Systemen der virtuellen Realität mit mindestens zwei Inertialsensoren zur Erfassung von analogen Werten der Beschleunigung und/oder der Winkelgeschwindigkeit der Eingabevorrichtung mit einer ersten Frequenz, einem integrierten Signalprozessor zum Auswerten der von den Inertialsensoren ausgegebenen analogen Daten und Erzeugung digitaler differentialer Daten bezüglich der Bewegung der Eingabevorrichtung mit einer niedrigen Frequenz, die geringer ist als die erste Frequenz, mit einer Kommunikationsvorrichtung zum kabellosen Senden der digitalen Daten niedriger Frequenz und einer Auslösevorrichtung, die die Inertialsensoren einschaltet.

Fig. 2

**Beschreibung**

Die vorliegende Erfindung bezieht sich auf eine Eingabevorrichtung zur Erzeugung und Übermittlung von Orts-, Lage- und/oder Bewegungsdaten zur Navigation und Manipulation in Systemen der virtuellen Realität.

Die zunehmende Verbreitung von immersiven Systemen in industriellen Prozessen hat zur Folge, daß die Aspekte der Arbeitsplatzgestaltung und der Mensch-Maschine-Schnittstelle immer wichtiger werden verglichen mit den Anfangsjahren dieser noch jungen Technologie. Die Projektionstechnik der Head Mounted Displays (HMD) wird in letzter Zeit zugunsten von großräumigen Stereoprojektionen aufgegeben. Datenhandschuhe, die noch vor einigen Jahren das Bild der virtuellen Realität bestimmten, werden zunehmend durch tastenbasierte Eingabegeräte ersetzt.

Diese Visualisierungseinrichtungen werden verwendet, um computergenerierte Daten naturgetreu zu visualisieren und subjektiv zu überprüfen. Die natürliche Kommunikation und der geringe Aufwand zur Nutzung dieser Technologie unterstützt dabei ihre Akzeptanz und damit auch ihre Effizienz.

Herkömmliche Installationen erschweren jedoch die Verwendung dieser Technologien durch den Einsatz kabelgebundener Lagemeß- und Interaktionssysteme. Gerade bei der gemeinsamen Nutzung von Systemen der virtuellen Realität wird das Interaktionsgerät und die vermessene Brille häufig weitergegeben. Alle am Prozeß beteiligten Fachpersonen bringen dabei ihr spezifisches Fachwissen in die Beurteilung ein und müssen dazu einen maßstäblichen und perspektivisch korrekten Eindruck von den visualisierten Objekten bekommen. Auch kann in manchen Fällen eine beidhändige Interaktion nicht eingesetzt werden, weil die erforderlichen Zuleitungen in kürzester Zeit ein unentwirrbares Kabelbündel bilden.

Systeme der virtuellen Realität binden den Benutzer stark in die visuelle Simulation durch das Computersystem ein. Dieses Eintauchen des Benutzers wird als Immersion bezeichnet. Systeme der virtuellen Realität werden deshalb auch als immersive Systeme bezeichnet.

Die Immersion des Benutzers in computergenerierte Welten setzt spezielle Technologien voraus, die im folgenden kurz skizziert werden. Die Visualisierung muß die Objekte in einem korrekten Stereomodell darstellen. Neben der individuellen Meßgrößen dem Abstand der Augen müssen für die korrekte Stereodarstellung, die Bewegungen des Benutzers in die jeweils aktuelle Perspektive umgesetzt werden.

Für die Messung der aktuellen Lage werden verschiedene Meßtechniken wie z.B. Magnetfelder oder Bildbearbeitung eingesetzt. In manchen Fällen wird auf die Lagemessung verzichtet und eine feste Sichtposition angenommen. Bei dieser Darstellung werden die dargestellten Objekte auch nur an diesem festgelegten Punkt in ihren Dimensionen richtig wahrgenommen.

Die erforderliche Grafikleistung des eingesetzten Rechnersystems wird von den darzustellenden Objektdaten und den Funktionalitäten des Softwaresystems bestimmt. Die Leistung und Güte einer immersiven Umgebung hängt damit von einer optimalen Auslegung aller Einzelkomponenten ab.

Eine typische Installation besteht aus:

- **Projektionssystem:**
  Auf der Basis unterschiedlicher Techniken wie z.B. Röhren- oder DLP-Projektoren werden die genierten Bildinformationen auf eine Projektionsscheibe oder Leinwand projiziert. Es wird zwischen aktivem und passivem Stereo unterschieden. Alternativ zu einem Projektionssystem werden Displaysysteme wie z.B. Datenhelm oder BOOM eingesetzt.
- **Projektionsscheibe oder Leinwand:**
  Die eingesetzten Projektionsscheiben oder -leinwände sind speziell bearbeitet, um einen guten Kontrast bei einer gleichmäßigen Helligkeitsverteilung zu gewährleisten.
- **Grafikrechner:**
  Je nach Anwendung werden Grafikworkstations mit mehreren Grafiksubsystemen oder ein Verbund mehrerer Rechner eingesetzt, um die Bildinformationen aus den digitalen Objekten zu generieren.
- **Tracking-System:**
  Typische Tracking-Systeme basieren auf der Vermessung künstlich generierter magnetischer Felder. Diese Systeme können die Lage eines Sensors in einem räumlich begrenzten Bereich messen.
- **Eingabesysteme:**
  Die Steuerung der Simulation erfolgt durch Eingabegeräte, die neben Tastern über einen Lagesensor verfügen. Die Auswertung der Sensordaten ermöglicht z.B. das Greifen von visualisierten Objekten.

Die Eingabesysteme für immersive Anwendungen setzen sich aus einem logischen und einem physischen Teil der Benutzungsschnittstelle zusammen. Der logische Teil ist die virtuelle räumliche Benutzungsschnittstelle. Dieser Teil beinhaltet z.B. die Darstellung von Funktionen oder Menüs, die Methode der Selektion von Objekten oder Funktionsmodi und die Art der Navigation. Der physische Teil faßt die gerätetechnische Realisierung zusammen: die Gestaltung der Eingabesysteme, die eingesetzte Projektionstechnologie und die Gestaltung des gesamten Arbeitsbereiches.

Bei der Implementierung von immersiven Anwendungen werden beide Aspekte der Benutzungsschnittstelle berücksichtigt und bilden in ihrem Verbund die Mensch-Maschine Schnittstelle des immersiven Systems.

Die handgeführten Eingabegeräte für immersive Systeme werden dabei als Interaktionssysteme bezeichnet. Neben speziellen Interaktionssystemen für die jeweilige Anwendung werden klassische Eingabegeräte aus dem Bereich 3D-CAD eingesetzt. Derartige Geräte sind beispielsweise gestenbasierte Eingabesysteme wie Datenhandschuhe, tastenbasierte Eingabesysteme mit oder ohne Lagemessung oder spezielle Eingabesysteme wie beispielsweise spezielle Sitzkisten, Cockpits, etc.

Die ersten Eingabesysteme für Anwendungen der virtuellen Realität sind Datenhandschuhe. Die Sensoren sind in einen Handschuh eingearbeitet, oder werden direkt auf die Hand aufgesetzt. Die erforderlichen Kabel werden zusammengeführt und gemeinsam an die Auswerteelektronik geführt. Diese kommuniziert mit. dem Hostsystem über eine Standard RS232C Schnittstelle.

Die absolute Position und Orientierung der Hand wird über ein Tracking-System (Polhemus oder Ascension) gemessen.

Eine eigene Klasse stellen die Systeme dar, bei denen der Benutzer ein Gerät in der Hand hält, mit dem die immersive Umgebung manipuliert werden kann. Diese Geräte beinhalten einen Sensor für die Position und Orientierung (z.B. Polhemus oder Ascension) und haben mehrere Schalter, Drehregler oder Taster, mit denen der Benutzer Aktionen ausführen kann.

Weiterhin sind tastenbasierte Systeme mit internem Trackingsystem bekannt. So stellt beispielsweise Logiteck mit seinem Trackman ein kabelloses Präsentationssystem vor, bei dem die Bewegungen des Mauszeigers auf einem Bildschirm in der Ebene durch eine Kugel gesteuert wird.

Nachteilig an den im Stand der Technik verfügbaren Interaktionsgeräten ist, daß diese großteils kabelgebunden sind. Alle Trackingsysteme benötigen weiterhin externe statische Referenzquellen, wie beispielsweise magnetische Spulen oder Kamerasysteme. Die Installation und Ausrichtung dieser Referenzquellen muß daher präzise und robust durchgeführt werden.

Aufgrund der eingesetzten Technologie sind viele der Interaktionsgeräte zu schwer und bei einer freihändigen Nutzung in einer immersiven Umgebung nicht handgerecht.

Aus all diesen Nachteilen ergibt sich, daß eine mögliche Weitergabe an beteiligte Personen erschwert wird, wobei als wesentlich zerstörender Faktor hierbei das Kabel zur Datenübertragung zu betrachten ist.

Aufgabe der vorliegenden Erfindung ist es daher, eine Eingabevorrichtung zur Verfügung zu stellen, die in der Hand gehalten werden kann und bei der Weitergabe an weitere Personen keine Probleme auftreten. Weiterhin ist es Aufgabe der vorliegenden Erfindung, eine Visualisierungseinrichtung zur Verfügung zu stellen, die die oben genannten Nachteile vermeidet. Diese Aufgabe wird durch die handgehaltene kabellose Eingabevorrichtung nach Anspruch 1 und die Visualisierungsvorrichtung nach Anspruch 16 gelöst. Vorteilhafte Weiterbildungen der erfindungsgemäßen Eingabevorrichtung und der erfindungsgemäßen Visualisierungseinrichtung werden in den jeweiligen abhängigen Ansprüchen gegeben.

Erfindungsgemäß können mit der hier vorgestellten Eingabevorrichtung kabellose Systeme der virtuellen Realität mit einer hohen Komplexität an Interaktionsmöglichkeiten aufgebaut werden. Die erfindungsgemäße Kombination von Inertialsensoren mit einem Software-Konzept für die Übertragung der geschätzten realen Bewegung der Eingabevorrichtung zu einer Bewegung der visualisierten Objekte ermöglicht eine direkte Interaktion mit stereoskopisch visualisierten Objekten ohne Kabel und ohne ein zusätzliches Trackingsystem.

Erfindungsgemäß werden also differenziale Lagedaten für isometrische Interaktionen in VE-Systemen (System der virtuellen Realität) verwendet. Insbesondere gehört hierzu die Hardware des Interaktionsgerätes (der Eingabevorrichtung) und die Auswertemethoden für die Interaktionen und Funktionsselektionen.

Die erfindungsgemäße Eingabevorrichtung hat den Vorteil, daß sie kabellos ist. Dies wird möglich, indem die Daten der Inertialsensoren durch einen integrierten Signalprozessor ausgewertet werden. Die Datenübertragung lediglich der ausgewerteten Daten erfolgt dann auf einer Funkstrecke. Dadurch ist die Übertragung ohne eine Sichtverbindung über weite Strecken hinweg problemlos möglich. Das System setzt dazu stromsparende Komponenten in Verbindung mit einer Ladeschale für die Akkumulatoren ein.

Weiterhin ist vorteilhaft, daß die Datenerfassung ohne eine externe Referenzquelle erfolgt. Denn die Inertialsensoren messen die äußeren aufgebrachten Kräfte und ermitteln die zurückgelegten Wege bzw. Winkel durch eine einfache oder mehrfache Integration der Meßwerte. Dieses Verfahren setzt daher systembedingt keine externen Referenzen voraus. Es ist problemlos in bereits bestehende VE-Systeme zu integrieren und benötigt keinen hohen Installations- oder Vermessungsaufwand.

Aufgrund des Einsatzes lediglich leichtgewichtiger und kleiner Bauelemente, wie beispielsweise Inertialsensoren, Signalprozessor und Sender, ist eine weitgehende Reduzierung des Gewichts bei einer möglichst guten Gestaltung des Eingabegerätes möglich. Dadurch kann das Eingabegerät handgerecht gestaltet werden, gegebenenfalls auch für unterschiedliche Anwendungsbereiche in unterschiedlicher Form.

Dadurch, daß das Eingabegerät kein Kabel zur Datenübermittlung benötigt und eine günstige Gestaltung möglich ist, kann die Eingabevorrichtung schnell und unkompliziert zwischen verschiedenen Personen weitergegeben werden.

Erfindungsgemäß werden Inertialsensoren eingesetzt, mit denen eine differenziale Lagemessung durchgeführt wird. Derartige Inertialsensoren, wie Beschleunigungskreisel und Erdmagnetfeldsensoren verbinden die Vorteile einer geringen Größe mit dem Vorteil, daß kein externes Resonanzfeld aufgebaut werden muß. Sie sind robust und funktionieren in jedem Umfeld. Inertialsensoren zwingen jedoch dazu, die Meßwerte einfach bzw. doppelt zu integrieren, um die benötigten Lagewerte für das VE-System zu erhalten. Dies ist jedoch, wie die Erfinder erkannt haben, kein Nachteil, wenn entweder eine Modellgleichung für das Verhalten des Systems bzw. der Eingabevorrichtung vorliegt oder kurze Meßzeiten ausreichen.

Lediglich zusätzlich kann eine Lagemessung des Kopfes mit einem optischen System durchgeführt werden. In diesem Falle erfolgt also ein hybrider Ansatz für die Lagemessung von Kopf- und Interaktionssystem.

Im folgenden werden Beispiele für erfindungsgemäße Eingabevorrichtungen und Visualisierungeinrichtungen beschrieben. Es zeigen:

Figur 1      ein kartesisches Koordinatensystem mit Bezeichnung der Achsen und Winkel;

Figur 2      eine Funktionsskizze für ein erfindungsgemäßes Visualisierungssystem;

Figur 3      ein Blockdiagramm einer erfindungsgemäßen Eingabevorrichtung;

Figur 4      einen Querschnitt durch eine erfindungsgemäße Eingabevorrichtung;

Figur 5      die Anordnung von Inertialsensoren in einer erfindungsgemäßen Eingabevorrichtung;

Figur 6      eine Übersicht der möglichen Interaktionen mit einer differenzialen Lagemessung;

Figur 7      die Darstellung eines Kugelmenüs;

Figur 8      die Darstellung eines ebenen Symbolmenüs;

Figur 9      die Darstellung eines transparenten Textmenüs; und

Figur 10     den Algorithmus eines diskreten Kalmanfilters.

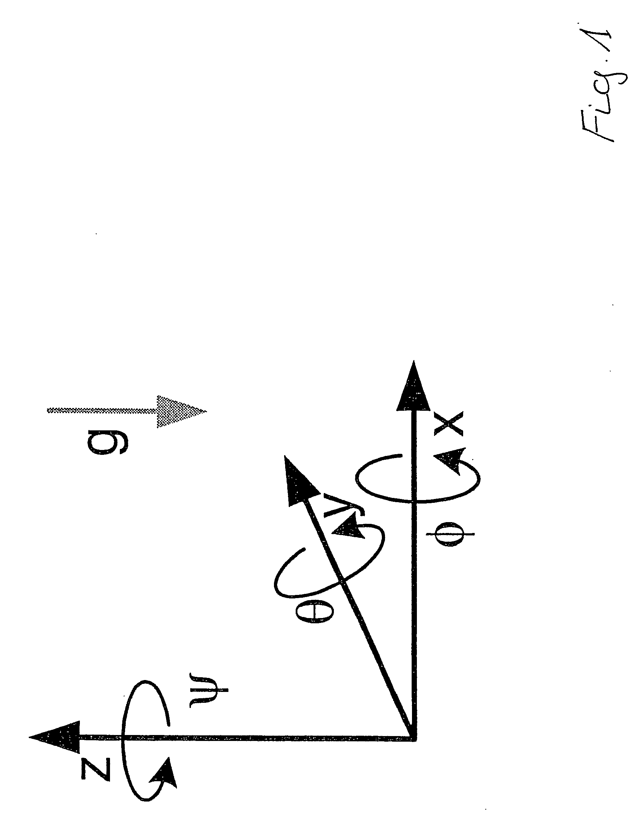

Figur 1 zeigt ein kartesisches Koordinatensystem zur Erläuterung der im vorliegenden verwendeten Koordinaten x, y, z sowie der zugehörigen Drehwinkel um die x-, y- oder z-Achse, $\phi$, $\theta$, $\psi$. Weiterhin ist die Richtung der Erdschwerkraft g eingezeichnet.

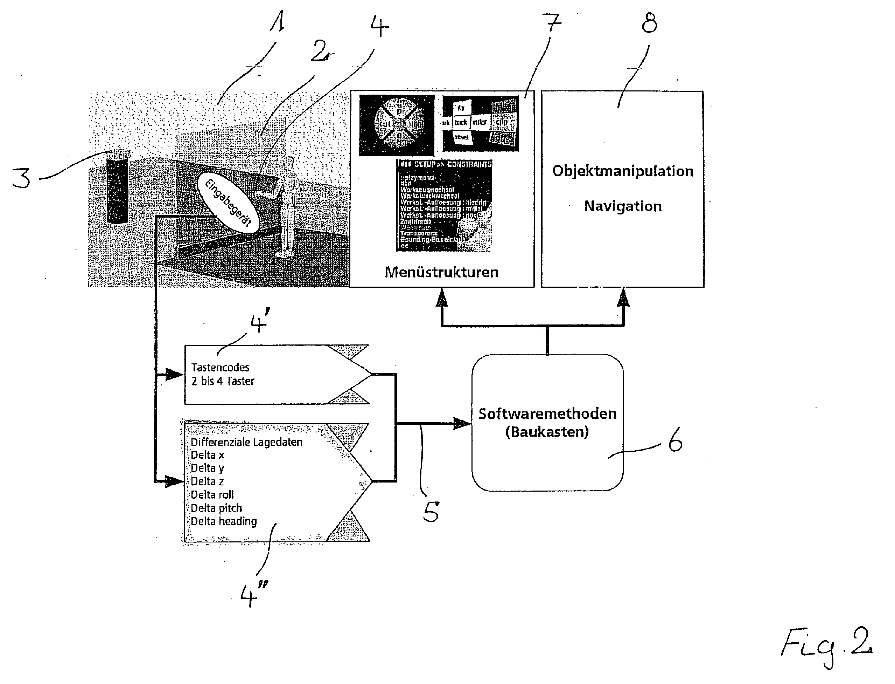

Figur 2 zeigt nun eine Visualisierungseinrichtung eines VR-Systems 1, wie es nach der vorliegenden Erfindung verwendet wird.

Das VR-System 1 weist einen Bildschirm 2 auf, vor dem eine Person steht, um die dortigen über einen Projektor 3 erzeugten Bilder zu betrachten. Die Person hält ein Eingabegerät 4 gemäß der vorliegenden Erfindung in der Hand, um Lage-, Orts- oder Bewegungsdaten zu erzeugen und zu übermitteln. Diese Daten werden als differenziale Lagedaten 4'' erzeugt. Die Messung erfolgt dabei während des Drückens eines Tasters 4', wobei das Eingabegerät 4 noch weitere Taster aufweisen kann. Die differenzialen Lagedaten werden in einem Signalprozessor erzeugt, der in das Eingabegerät integriert ist. Sie werden anschließend an einen Mikroprozessor übertragen, in dem verschiedene Auswerteprozesse 6 zur Erzeugung einer Graphikdarstellung (Objektmanipulation, Navigation 8, Menüstrukturen 7) durchgeführt werden. Das Eingabegerät 4 ist dabei mit dem Mikroprozessor kabellos über eine Radiowellenverbindung verbunden. Die differenzialen Lagedaten 4'', die in dem Eingabegerät 4 erzeugt werden, entsprechen. einer geschätzten realen Bewegung des Eingabegerätes. Der Mikroprozessor berechnet hieraus eine Bewegung der zu visualisierenden Objekte und ermöglicht damit eine direkte Interaktion mit steroskopisch visualisierten Objekten ohne Kabel und ohne zusätzliches Trackingsystem. Damit wird die Komplexität des VR-Systems 1 für eine Reihe von Anwendungen der virtuellen Realität reduziert, die Benutzungsschnittstelle zu derartigen VR-Systemen wird einfacher und damit leichter beherrschbar.

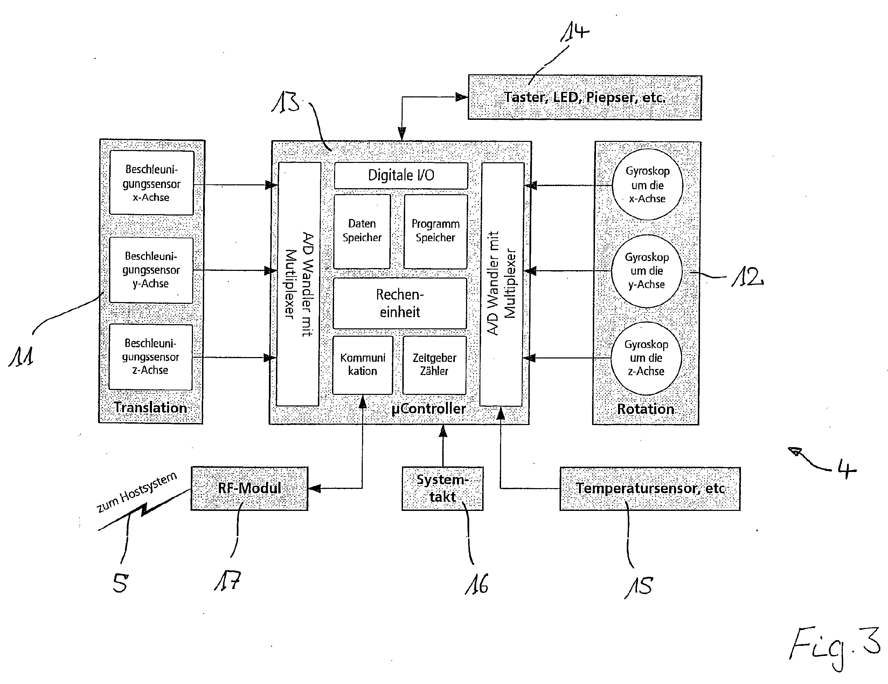

Figur 3 zeigt den grundsätzlichen Aufbau der Elektronik und der Meßsensoren in einer erfindungsgemäßen Eingabevorrichtung 4. Diese Eingabevorrichtung 4 weist bis zu drei Beschleunigungssensoren 11 und bis zu drei Gyroskope 12 auf, um nach Integration der erzeugten Meßdaten aus Koordinaten und Winkelkoordinaten zu erhalten. Die erzeugten Meßwerte der Beschleunigungssensoren 11 und der Gyroskope 12 werden in einen Signalprozessor 13 eingegeben, der zuerst eine Analog-Digital-Wandlung der Meßwerte durchführt. Anschließend werden die Daten integriert und verarbeitet. In dem Signalprozessor werden beispielsweise die Daten so integriert, daß lediglich Lage-, Orts- und Bewegungsdaten über ein RF-Modul 17 ausgegeben werden, die die Frequenz einer Bilddarstellung aufweisen, beispielsweise 20 bis 50 Hertz. Dadurch wird die zu übertragende Datenmenge gegenüber dem Stand der Technik sehr stark reduziert. Mit dem digitalen Signalprozessor 13 ist ein Systemtakt 16 verbunden. Weiterhin sind an dem Signalprozessor 13 Taster, LD's Piepser 14 oder Sensoren wie beispielsweise Temperatursitzungen 15 verbunden. Hier wie bei sämtlichen Figuren werden für entsprechende Elemente entsprechende Bezugszeichen verwendet.

Durch die beschriebene Vorgehensweise, nämlich Übertragung der bereits aufintegrierten digitalisierten Daten werden Störeinflüsse durch die Signalübertragung reduziert und die zu übertragende Informationsmenge wird an die erforderliche Frame Rate des VR-Systems angepaßt. Als Folge kann für die Funkübertragung 5 eine geringere Übertragungsrate als die Rate der Meßdaten aus den Sensoren 11, 12 eingesetzt werden.

Neben der differenzialen Lagemessung durch die Sensoren 11, 12 können die Beschleunigungssensoren 11 auch ohne aufwendige Auswertelogik für die Messung der Orientierung der Eingabevorrichtungen, beispielsweise in Ruhe gegenüber dem Schwerefeld genutzt werden. Die möglichen Interaktionen werden dann auf ruhige Dreh- bzw. Neigebewegungen reduziert. Die so erhaltenen absoluten Daten ermöglichen komplexe Interaktionen und sind durch ihre unmittelbare Überdeckung der realen Lage mit der virtuellen Repräsentation für viele Anwendungen in VR-Systemen gut geeignet.

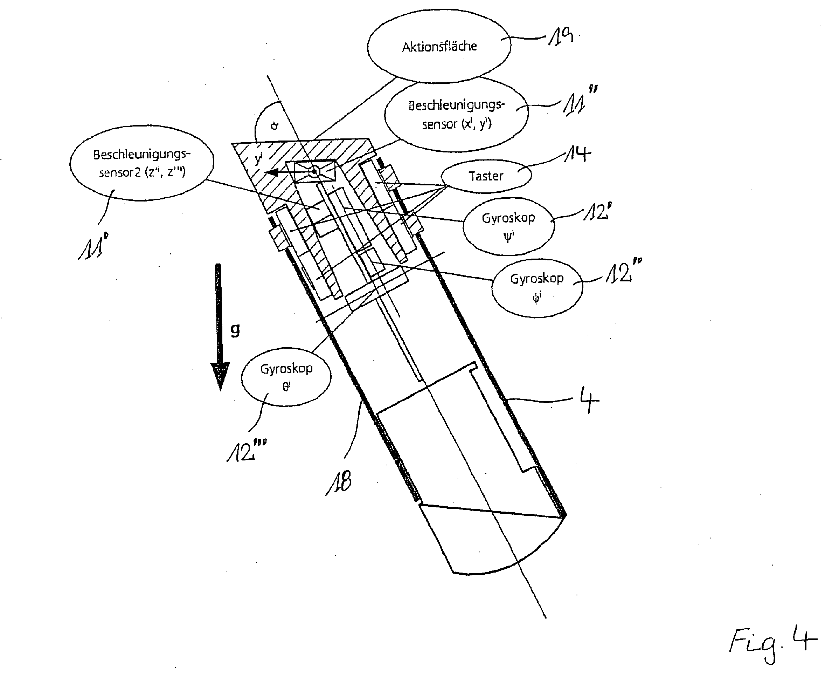

Figur 4 zeigt eine erfindungsgemäße Eingabevorrichtung. Diese ist in Form eines handgehaltenen Stabes 4 ausgeführt, wobei dieser hier im Schnitt dargestellt ist. Zu erkennen ist die Lage der drei Gyroskope 12', 12'', 12''' sowie der Beschleunigungssensoren 11' und 11''. Der Beschleunigungssensor 11'' ist dabei für die Beschleunigung in Richtung der X- und Y-Achse zuständig. Weiterhin weist diese Eingabevorrichtung ein Gehäuse 18 auf, das an seiner Stirnfläche unter einem Winkel $\alpha$ zur Längsachse der Vorrichtung 4 abgeschrägt ist. Diese Fläche bildet eine Aktionsfläche 19, auf der beispielsweise Taster zur Interaktion angeordnet werden können. Daneben befinden sich in dem Gehäuse 18 auf dessen Umfangsfläche Taster 14 angeordnet. Diese Taster können zur Interaktion sowie zur Festlegung der Meßdauer durch die Beschleunigungssensoren 11', 11'' bzw. die Gyroskope 12', 12'', 12''' verwendet werden.

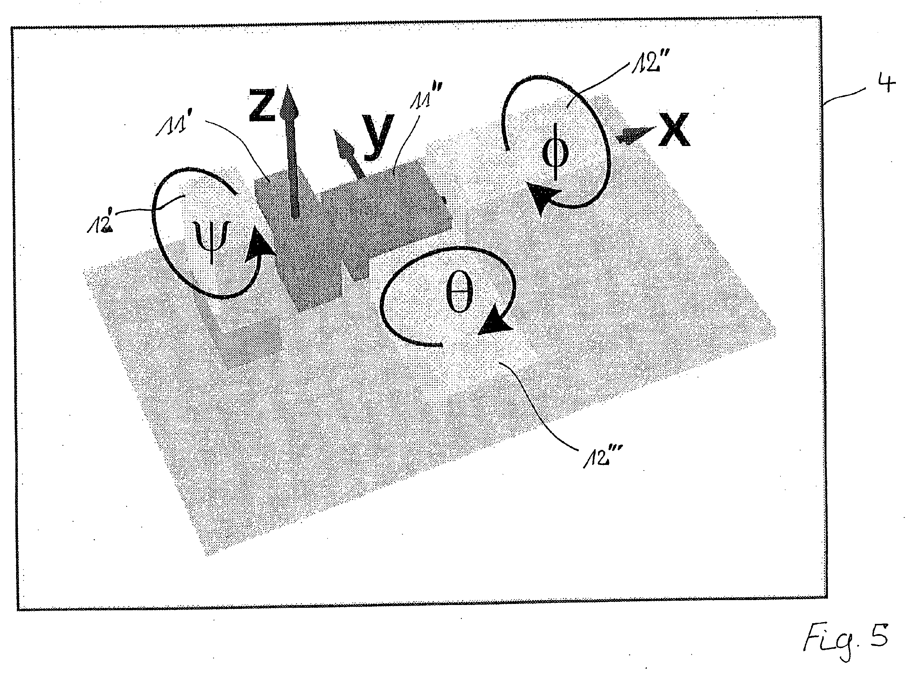

Figur 5 zeigt die Anordnung der Beschleunigungssensoren 11', 11'' und der Gyroskope 12', 12'', 12''' in einer Eingabevorrichtung 4 aus Figur 4. Mit einer derartigen Eingabevorrichtung können sämtliche Drehwinkel als auch sämtliche translatorischen Bewegungen erfaßt werden.

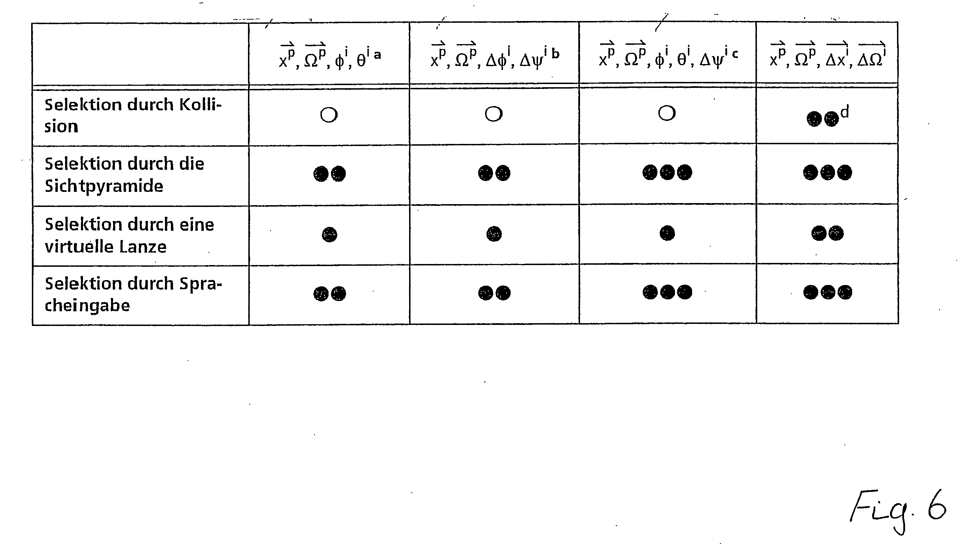

Figur 6 gibt eine Übersicht der möglichen Interaktionen mit einer differenzialen Lagemessung wider. Dabei werden die differenzialen Lagedaten für die Selektion in unterschiedliche Eignungsstufen eingeteilt, wobei drei gefüllte Punkte bedeuten "sehr gut" geeignet, zwei gefüllte Punkt "gut" geeignet, ein gefüllter Punkt "bedingt" geeignet und ein ungefüllter Punkt als "ungeeignet" beurteilt wird. Index a bedeutet die Messungen beispielsweise mit Beschleunigungssensoren für die Messung der Neigungswinkel, Index b die Verwendung einer Gyromaus mit einem zweiachsigen Vibrationskreisel, Index c die Verwendung von Beschleunigungssensoren für die Neigung und einen Kreiselsensor und Index d bedeutet, daß die aktuelle Haltung gut abgeschätzt werden kann und dieser Wert in die Lage und Bewegungsberechnung eingehen kann. Im folgenden werden einige Auswertekonzepte für die Interaktion und die Exploration beschrieben.

## Verwendung eines zweiachsigen Beschleunigungssensors

Die Neigung der Interaktionsfläche wird hier durch einen zweiachsigen Beschleunigungssensor gemessen. Das System wird langsam und zielgenau gedreht. Die Grundhaltung des Benutzers ist stehend mit leicht angewinkelten Armen vor der Stereoprojektion. Sobald Interaktionen mit der Simulation durchgeführt werden, werden die Arme auf ca. 90° angewinkelt. Die Rotationsbewegungen erfolgen aus der Hand bzw. Ellbogen und Schultergelenk heraus. Die Wertebereiche für die Winkel sind damit:

- $\phi$ = [30°, -20°] Schwenken des Handgelenkes
- $\theta$ = [130°, -120°] links und rechts drehen der Hand gegenüber dem Rumpf.

Die Orientierung in zwei Freiheitsgraden des Beschleunigungssensors bestimmt sich aus den Meßwerten $a_x$ und $a_y$ nach (5.2) :

$$\begin{bmatrix} \phi_k^i \\ \theta_k^i \end{bmatrix} = \begin{bmatrix} a\sin\dfrac{a_y}{1g} \\ \\ a\sin\dfrac{a_x}{1g} \end{bmatrix}$$

$$(5.2)$$

Zusätzlich zu dieser Sensorik verfügt das System über drei Drucktaster. Sobald ein Taster gedrückt ist, wird kontinuierlich die Orientierung des Systems bestimmt und zusammen mit der Tasterstellung übertragen.

Die Übertragung finden in ASCII statt. Dadurch können fehlerhafte Datenpakete aufgrund einer verrauschten Funkübertragung einfach identifiziert werden.

Das Datenformat für ein Datenpaket ist:

"*Tastenbyte*" "*Tab*" $\phi^i{}_k$ "*Tab*" $\theta^i_k$ *Oxa Oxd*

Die Winkelwerte sind in Grad, Tastencodes sind dezimal und belegen den Wertebereich 0 bis 7. Binär ist jedem Taster eine Bitposition zugeordnet, die beim Schließen des Tasters auf 1 gesetzt wird und sonst 0 ist. Damit sind die Ereignisse Taster drücken und Taster loslassen eindeutig identifiziert und können von der VR Software ohne Prelleffekte ausgewertet werden.

Aufbauend auf dem Interaktionskonzept Szene in der Hand sind folgende Interaktionen mit einem solchen System möglich:

**a) Translation in der x-y Ebene,**
**Translation in der x-z Ebene**

Aus der Änderung der Neigungswinkel $\phi^i$ und $\theta^i$ wird die neue Position des Objektes in der Ebene linear nach der Beziehung (5.3) bestimmt.

$$\begin{bmatrix} x_{k+1}^o \\ y_{k+1}^o \\ z_{k+1}^o \end{bmatrix} = \begin{bmatrix} x_k^o + \theta_k^i \cdot K_x \\ y_k^o + \phi_k^i \cdot K_y \\ z_k^o + \phi_k^i \cdot K_z \end{bmatrix}$$

$$(5.3)$$

Die konstanten Faktoren $K_x$, $K_y$, $K_z$ sind spezifisch für die visualisierten Daten und können nicht generell vorgegeben werden. Die Selektion der Translationsebene wird über den gewählten Taster festgelegt.

Durch die Translation kann das Objekt absolut oder relativ bewegt werden. Bei einer absoluten Translation kehrt das Objekt immer zum Ursprung zurück, bei einer Relativbewegung bleibt das Objekt dort stehen, wohin es bewegt wurde. Die Neigungsbewegungen summieren sich auf. Die Art der Anwendung entscheidet über das zu realisierende Bewegungsmodell.

Die relative Translation speichert die Werte zum Zeitpunkt $t_0$ und bildet die Differenzen der aktuellen Meßwerte zu diesem Referenzwert. Damit ist ein "Nachfassen" des Objektes möglich und der Bewegungsraum ist nicht mehr durch den Wertebereich der gemessenen Winkel begrenzt. Die Bewegungsgleichungen gelten nach (5.4).

$$\begin{bmatrix} x^o_{k+1} \\ y^o_{k+1} \\ z^o_{k+1} \end{bmatrix} = \begin{bmatrix} x^o_k + (\theta^i_{t_0} - \theta^i_k) \cdot K_x \\ y^o_k + (\phi^i_{t_0} - \phi^i_k) \cdot K_y \\ z^o_k + (\phi^i_{t_0} - \phi^i_k) \cdot K_z \end{bmatrix}$$

$$(5.4)$$

**b) Rotation um die Koordinatenachsen**

Bei der Rotation werden die gemessenen Winkel in eine Rotation des Objektes nach (5.5) umgesetzt. Das Interaktionsgerät legt durch seine gemessene Lage im Raum die Objektorientierung absolut fest. Das hat zur Folge, daß sich das visualisierte Objekt auf Knopfdruck in die Lage bewegt, in der das Interaktionsgerät gehalten wird.

$$\begin{bmatrix} \phi^o_{k+1} \\ \theta^o_{k+1} \\ \psi^o_{k+1} \end{bmatrix} = \begin{bmatrix} \phi^o_k \\ \theta^o_k \\ \psi^o_k \end{bmatrix} + \begin{bmatrix} O_x \cdot \phi^i_k \\ O_y \cdot \theta^i_k \\ O_z \cdot \theta^i_k \end{bmatrix}$$

$$(5.5)$$

Bei der konzipierten Winkelmessung kann die Rotation um die z-Achse ($\psi^i$) nicht gemessen werden. Über einen Taster wird alternativ die Drehung um die y-Achse ($\theta^i$) auf diese Rotation übertragen.

Analog zur relativen Translation kann die Rotation ebenfalls auf differenzialen Daten (5.6) beruhen

$$\begin{bmatrix} \phi^o_{k+1} \\ \theta^o_{k+1} \\ \psi^o_{k+1} \end{bmatrix} = \begin{bmatrix} \phi^o_k \\ \theta^o_k \\ \psi^o_k \end{bmatrix} + \begin{bmatrix} O_x \cdot (\phi^i_{t_0} - \phi^i_k) \\ O_y \cdot (\theta^i_{t_0} - \theta^i_k) \\ O_z \cdot (\theta^i_{t_0} - \theta^i_k) \end{bmatrix}$$

$$(5.6)$$

**c) Angepaßtes Zeige und Fliege**

Das konzipierte Interaktionsmodell ist mit Einschränkungen für ein Navigationsmodell auf der Basis von Zeige und Fliege geeignet. Für dieses Navigationsprinzip werden die Daten des Kopftrackung ($x_k \, y_k \, z_k \, \phi \, \theta \, \psi$) mit einbezogen. Das Bewegungsmodell entspricht in etwa dem Maus-Bewegungsmodell von Performer.

Die Bewegungsrichtung wird von der Kopforientierung vorgegeben. Es werden drei Taster benötigt, um die Softwaremode zu schalten:

- Modus 1: Vorwärtsflug mit Beschleunigung Solange der Taster gedrückt ist, wird die Geschwindigkeit konstant erhöht.

- Modus 2: Rückwärtsflug mit Beschleunigung wie bei Modus 1, nur wird die Geschwindigkeit negativ erhöht.

- Modus 3: Stop
  Stehenbleiben an der aktuellen Position

Der Neigungswinkel $\phi^i$ des Interaktionsgerätes wird für die Änderung des Azimutwinkels verwendet. Dabei werden die absoluten Winkelwerte bezogen auf die Schwerkraft eingesetzt. So hat der Benutzer durch die visuelle Lage des Interaktionsgerätes eine unmittelbare optische Kontrolle zu der virtuellen Navigation.

Die aktuelle Lage des Benutzers berechnet sich nach (5.7).

$$
\begin{bmatrix} x^p_{k+1} \\ y^p_{k+1} \\ z^p_{k+1} \\ \phi^p_{k+1} \\ \theta^p_{k+1} \\ \psi^p_{k+1} \end{bmatrix} = \begin{bmatrix} x^p_k + v_k \cdot \sin \psi^p_k \\ y^p_k + v_k \cdot \cos \psi^p_k \\ z^p_k + v_k \cdot \sin \phi^i_k \\ \phi^p_{k+1} \\ \theta^p_{k+1} \\ \psi^p_{k+1} \end{bmatrix}
$$

$$(5.7)$$

Dabei wird die skalare Geschwindigkeit $v_k$ über die Zeitdauer des gedrückten Tasters bestimmt.

$$V_{k+1} = v_k \pm K \qquad (5.8)$$

**d) Bedienung von Menüstrukturen**

Die Selektion von Funktionen oder Softwaremodi kann mit diesem Interaktionsgerät über einen Taster für die Funktionen und die Sensorik gesteuert werden. Die Konzepte der Menüstrukturen werden im folgenden beschrieben.

**(i) Kugelmenü**

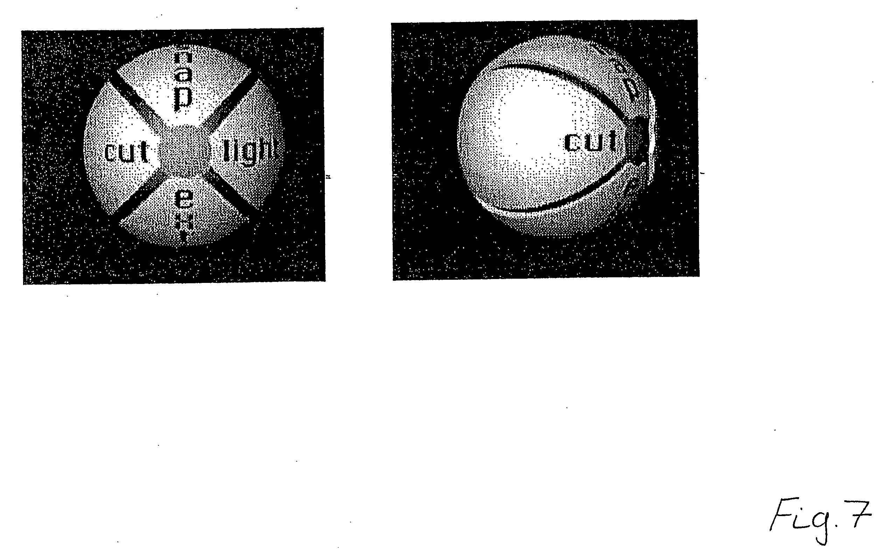

Figur 7 zeigt ein Kugelmenü, das zur Selektion von Funktionen oder Softwaremodi über einen Taster dienen kann.

Bei einem derartigen Kugelmenü werden die Funktionen durch die Neigung um die x-Achse $\phi^i_k$ und die Neigung um die y-Achse $\theta^i_k$ ausgewählt. Die Menükugel ermöglicht die Selektion von 5 verschiedenen Optionen:

- Klick ohne Neigung ($M_0$)
- Klick mit Neigung nach rechts bzw. links ($M_1$, $M_2$)
- Klick mit Neigung nach oben bzw. unten ($M_3$, $M_4$)

Bei der Winkelauswertung wird immer nur eine Bewegung berücksichtigt. Das System springt nach einer Verdrehung von mindestens $\pm 15°$ in die nächste Funktionsstufe.

$$
\begin{bmatrix} M_0 \\ M_1 \\ M_2 \\ M_3 \\ M_4 \end{bmatrix} = \begin{bmatrix} (\phi^i_k < |15°| \wedge (\theta^i_k < |15°|) \\ (\theta^i_k < -15°) \wedge (\phi^i_k < |15°|) \\ (\theta^i_k > 15°) \wedge (\phi^i_k < |15°|) \\ (\phi^i_k < -15°) \wedge (\theta^i_k < |15°|) \\ (\phi^i_k > 15°) \wedge (\theta^i_k < |15°|) \end{bmatrix}
$$

$$(5.9)$$

**(ii) Transparentes Text-Menü und Flat Icon Menü**

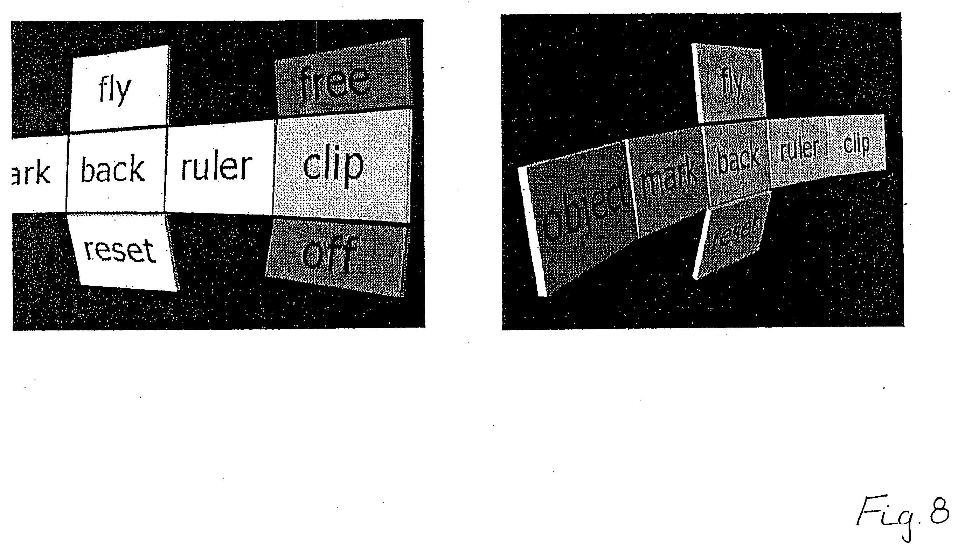

Figur 8 zeigt ein sogenanntes "Flat Icon Menü" (ebenes Symbol Menü).

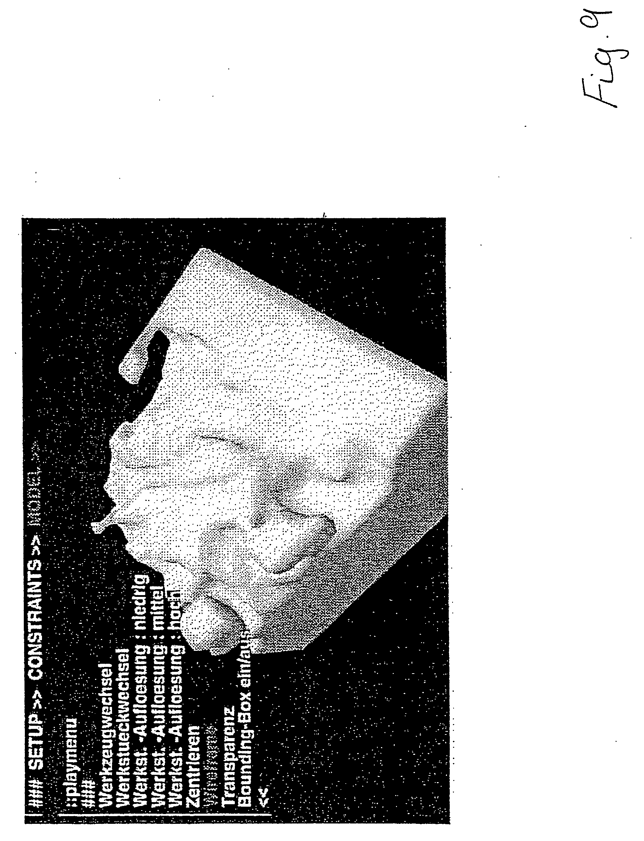

Figur 9 zeigt eine weitere Menüform, nämlich ein sogenanntes transparentes Textmenü. Die beiden Menütypen unterscheiden sich nur durch die Gestaltung und den Ort der Darstellung voneinander. Beim Flat Icon Menü werden die einzelnen Menüpunkte entlang einer Reihe von Symbolflächen dargestellt, wobei die jeweiligen Unterpunkte nach oben und nach unten als Symbolflächen aus der angewählten Symbolfläche herausklappen. Beim transparenten Text-Menü werden die möglichen Modi als Textleiste im oberen Bildrand dargestellt. Die Selektion basiert auf den gemessenen Neigungswinkel. Dabei springt die horizontale Funktionsselektion

$\theta^i_k$

nach einer bestimmten Neigungsbewegung immer auf den nächsten Menüpunkt. Eine vertikale Neigung

$\phi^i_k$

wählt innerhalb des Funktionsblockes die Untermenüs aus.

Der meßbare Winkelbereich von 90° wird auf die Anzahl der horizontalen und vertikalen Funktionen

$F^h_n, F^v_n$

aufgeteilt. Der angezeigte Modus wechselt, sobald dieser Winkelbereich überschritten wird.

$$M^h_{k+1} = \left|\theta^i_k\right| > \frac{90°}{F^h_n}$$

$$M^v_{k+1} = \left|\phi^i_k\right| > \frac{90°}{F^v_n}$$

Durch das Freigeben des Menütasters wird die markierte Selektion aktiviert.

**Verwendung eines zweiachsigen Beschleunigungssensors und eines Kreiselsensors in der Eingabevorrichtung**

Zusätzlich zu dem zweiachsigen Beschleunigungssensor aus dem vorigen Beispiel wird in diesem Beispiel ein Kreiselsensor integriert. Mit dem Kreiselsensor wird die Winkelgeschwindigkeit um die lokale z-Achse

$\psi^i_k$

gemessen. Die Winkelgeschwindigkeiten $\omega_z$ werden über die Zeitdauer des gehaltenen Tasters integriert und ausgegeben.

Da der Anfangswinkel $\psi^i_{k=t0}$ im Weltkoordinatensystem nicht bekannt ist, muß eine Annahme getroffen werden. In den meisten Anwendungen mit der Powerwall oder CAVE können mit dem Anfangswert 0° gute Ergebnisse erzielt werden. Die Interpretation der Winkeldaten geht davon aus, daß der Benutzer senkrecht zur Projektionsfläche steht, und das Interaktionsgerät in der Nullage hält. Die Qualität der Integration hängt vom Rauschverhalten und der zu erwartenden Bewegungen ab. Das Konzept geht von langsamen und präzisen Bewegungen aus. Die zu erwartenden Winkelgeschwindigkeiten sind daher sehr klein und liegen in der Nähe des Eigenrauschens des Sensors. Damit erhöht sich für diesen Sensor sowohl der hardwaretechnische Aufbau, als auch die Software für die Filteralgorithmen, um aus den Winkelgeschwindigkeiten korrekte Winkel zu erhalten.

Zusätzlich kann ein Magnetfeldsensor integriert werden, der den Anfangswinkel im Bezug zum Erdmagnetfeld mißt und in die Integration einfließen läßt. Für die numerische Integration muß ein Verfahren gewählt werden, das die verfügbare Rechenkapazität des µC in bezug auf Genauigkeit und Stromverbrauch optimiert.

**a) Navigationskonzept**

Das Interaktionskonzept unterscheidet sich mit diesem zusätzlichen Winkel nur geringfügig von dem vorigen Konzept. Im folgenden werden die Bewegungsgleichungen für die Navigation und Interaktion kurz vorgestellt.

Bei dem Interaktionskonzept "Szene in der Hand" werden die Objektdaten aus den Meßwerten des Interaktionskonzeptes nach Gleichung (5.11) berechnet.

$$\begin{bmatrix} x^0_{k+1} \\ y^0_{k+1} \\ z^0_{k+1} \\ \phi^0_{k+1} \\ \theta^0_{k+1} \\ \psi^0_{k+1} \end{bmatrix} = \begin{bmatrix} x^0_k + v_k \cdot k \cdot \theta^i_k \\ y^0_k + v_k \cdot k \cdot \phi^i_k \\ z^0_k + v_k \cdot k \cdot \phi^i_k \\ \phi^i_k \\ \theta^i_k \\ \psi^i_k \end{bmatrix}$$

$$(5.11)$$

Die Selektion der Transformationsebene x-y oder x-z bzw. die Unterscheidung zwischen Rotation und Translation erfolgt durch zwei Taster.

Bei der Navigation nach dem angepaßten "Zeige und Fliege" Modell kann durch den zusätzlichen Meßwert ein verbessertes Navigationsmodell zum Einsatz kommen. Hier gibt der Benutzer durch seine Blickdaten zum Zeitpunkt $t_0$ die Orientierung der Geschwindigkeit

$\psi^p_0$

vor. Die Geschwindigkeit in der x- bzw. y-Achse wird vom jeweiligen Neigungswinkel

$\phi^i_k$ bzw. $\theta^i_k$

bestimmt. Die Rotation um die eigene Achse wird ebenfalls vom Interaktionsgerät vorgegeben. Damit bestimmt sich die Position des Benutzers nach (5.12).

$$\begin{bmatrix} x^p_{k+1} \\ y^p_{k+1} \\ z^p_{k+1} \\ \phi^p_{k+1} \\ \theta^p_{k+1} \\ \psi^p_{k+1} \end{bmatrix} = \begin{bmatrix} x^p_k + K_x \cdot \theta^i_k \cdot \sin \psi^i_k \\ y^p_k + K_y \cdot \phi^i_k \cdot \cos \psi^p_k \\ z^p_k + K_z \cdot \sin \phi^i_k \\ \phi^p_k \\ \theta^p_k \\ \psi^p_0 + \psi^i_k \end{bmatrix}$$

$$(5.12)$$

**b) Selektion von Funktionsmodi**

Bei der Selektion von Funktionsmodi kann der Anfangswinkel

$\psi^i_0$

bei jedem Auslösen des Funktionstasters auf 0° gesetzt werden.

Auch bei dieser Eingabevorrichtung können ein Kugelmenü oder ein transparentes Textmenü zur Selektion von Funktionsmodi und dergleichen eingesetzt werden.

Bei einem Kugelmenü wie oben beschrieben, werden die Funktionen durch die Neigung um die x-Achse

$\phi^i_0$

und die Verdrehung um die z-Achse

$\psi^i_0$

ausgewählt. Die fünf Selektionsmöglichkeiten sind dann:

- Klick ohne Rotation ($M_0$)
- Klick mit Rotation nach rechts bzw. nach links ($M_1$, $M_2$)
- Klick mit Neigung nach oben bzw. unten ($M_3$, $M_4$).

Bei der Winkelauswertung wird immer nur eine Bewegung berücksichtigt. Das System springt nach einer Verdrehung von mindestens ± 15° in die nächste Funktionsstufe.

$$
\begin{bmatrix} M_0 \\ M_1 \\ M_2 \\ M_3 \\ M_4 \end{bmatrix} = \begin{bmatrix} (\phi_k^i < |15°|) \wedge (\psi_k^i < |15°|) \\ (\psi_k^i < -15°) \wedge (\phi_k^i < |15°|) \\ (\psi_k^i > 15°) \wedge (\phi_k^i < |15°|) \\ (\phi_k^i < -15°) \wedge (\psi_k^i < |15°|) \\ (\phi_k^i > 15°) \wedge (\psi_k^i < |15°|) \end{bmatrix}
$$

$$(5.13)$$

Bei Verwendung eines transparenten Textmenüs kann die horizontale Selektion durch die Rotation um die z-Achse
$\psi_0^i$
durchgeführt werden. Die vertikale Selektion funktioniert in derselben Weise wie in Kapitel 5.2.1 beschrieben.

$$
M_{k+1}^h = |\psi_k^i| > \frac{90°}{F_n^h}
$$

$$
M_{k+1}^v = |\phi_k^i| > \frac{90°}{F_n^v}
$$

**Verwendung eines sechsdimensionalen differenzialen Interaktionsgerätes**

Das am einfachsten zu benutzende Interaktionsgerät verfügt über ein Meßsystem für alle sechs Freiheitsgrade, wie es beispielsweise in Figur 3 und 4 dargestellt ist. Damit können translatorische und rotatorische reale Bewegungen isometrisch in virtuelle Aktionen umgesetzt werden. Ein solches System auf der Basis von Inertialsensoren verfügt über drei Kreiselsensoren für die Winkelgeschwindigkeiten in allen Achsen und drei Beschleunigungssensoren.
Die Zeitdauer der Messung ist durch die Auflösung der Beschleunigungssensoren und die zu messenden Bewegungen begrenzt. Beim Einsatz von aktiven Beschleunigungssensoren muß die Erdbeschleunigung aus den Meßwerten nach Gleichung (5.14) herausgerechnet werden.

$$
\begin{bmatrix} \ddot{x}_k^i \\ \ddot{y}_k^i \\ \ddot{z}_k^i \\ \dot{\phi}_k^i \\ \dot{\theta}_k^i \\ \dot{\psi}_k^i \end{bmatrix} = \begin{bmatrix} \ddot{x}_k^m + g(\sin\phi\sin\psi + \sin\theta\cos\phi\cos\psi) \\ \ddot{y}_k^m + g(-\sin\phi\cos\psi + \sin\theta\sin\psi\cos\phi) \\ \ddot{z}_k^m + g\cos\phi\cos\theta \\ \dot{\phi}_k^i \\ \dot{\theta}_k^i \\ \dot{\psi}_k^i \end{bmatrix}
$$

$$(5.14)$$

Die bei der Rotation auftretende Corioliskraft wird vernachlässigt. Die Anfangsbedingungen für die numerische Integration werden aus den Meßwerten zum Zeitpunkt $t_0$ nach (5.15) berechnet.

$$\begin{bmatrix} x_0^i \\ y_0^i \\ z_0^i \\ \phi_0^i \\ \theta_0^i \\ \psi_0^i \end{bmatrix} = \begin{bmatrix} 0 \\ 0 \\ 0 \\ a\sin\dfrac{\ddot{y}_0^m}{1g} \\ a\sin\dfrac{\ddot{x}_0^m}{1g} \\ 0 \end{bmatrix}$$

$$(5.15)$$

Die hier beschriebene Integration der Meßwerte ohne die Berücksichtigung eines Systemverhaltens für die Eingabevorrichtung führt in der Praxis zu einem anwachsenden Fehler aufgrund des Sensorrauschens. Für die Schätzung der Zustandsgrößen auf der Basis dieser verrauschten Messungen haben sich Filtermethoden nach Kalman bewährt, wie sie im folgenden beschrieben werden.

**Verwendung von Klamanfiltern zur Schätzung der Zustandsgrößen**

Das Systemverhalten der Eingabevorrichtung wird für die diskreten Meßzeiten im zeitlichen Abstand h durch (5.16) beschrieben:

$$\bar{x}_{k+1} = \bar{x}_k + h\dot{\bar{x}}_k + \frac{1}{2}h^2\ddot{\bar{x}}_k$$

$$\dot{\bar{x}}_{k+1} = \dot{\bar{x}}_k + h\ddot{\bar{x}}_k$$

$$(5.16)$$

den gemessenen Beschleunigungsdaten
$$\vec{\alpha}_k$$
und der vereinfachten Schreibweise

$$\begin{bmatrix} \vec{x}^1 \\ \vec{x}^2 \\ \vec{x}^3 \end{bmatrix} = \begin{bmatrix} \bar{x} \\ \dot{\bar{x}} \\ \ddot{\bar{x}} \end{bmatrix}$$

wird die Modellgleichung durch (5.17) beschrieben.
Die Funktionen

$$\{\xi_k\} \quad \text{mit} \quad \begin{bmatrix} \xi_k^1 & \xi_k^2 & \xi_k^3 \end{bmatrix}^T \quad \text{und} \quad \{\eta_k\}$$

werden als weißes Gauss'sches Rauschen mit folgenden Randbedingungen angenommen:

$$E(\bar{\xi}_k) = 0, \quad E(\eta_k) = 0$$

$$\begin{bmatrix} \bar{x}_{k+1}^1 \\ \bar{x}_{k+1}^2 \\ \bar{x}_{k+1}^3 \end{bmatrix} = \begin{bmatrix} 1 & h & \frac{1}{2}h^2 \\ 0 & 1 & h \\ 0 & 0 & 1 \end{bmatrix} \begin{bmatrix} \bar{x}_k^1 \\ \bar{x}_k^2 \\ \bar{x}_k^3 \end{bmatrix} + \begin{bmatrix} \bar{\xi}_k^1 \\ \bar{\xi}_k^2 \\ \bar{\xi}_k^3 \end{bmatrix}$$

$$(5.17)$$

$$\bar{a}_k = \begin{bmatrix} 0 & 0 & 1 \end{bmatrix} \begin{bmatrix} \bar{x}_k^1 \\ \bar{x}_k^2 \\ \bar{x}_k^3 \end{bmatrix} + \eta_k$$

$$E(\bar{x}_0 \bar{\xi}_k^T) = 0, \quad E(\bar{x}_0 \eta_k) = 0$$

mit der positiv definierten symmetrischen Matrix $Q_k$ und $r_k > 0$ für alle k. Es wird weiterhin vorausgesetzt, daß die Anfangsbedingungen
$E(\vec{x}_0)$ und $Var(\vec{x}_0)$
bekannt sind. Der Algorithmus für den Kalman Filter berechnet sich dann mit der Kovarianzmatrix $P_{k,k-1}$ aus den Elementen:

$$P_{k,k-1}^{i,j}$$

$$P_{k,k-1}^{1,1} = P_{k-1}^{1,1} \; 2hP_{k-1}^{1,2} + h^2 P_{k-1}^{2,2} + h^2 P_{k-1}^{1,3} + h^3 P_{k-1}^{2,3} + \frac{1}{4}h^4 P_{k-1}^{3,3} + Q_{k-1}^{1,1}$$

$$P_{k,k-1}^{1,2} = P_{k,k-1}^{2,1} + = P_{k-1}^{1,2} + hP_{k-1}^{1,3} + hp_{k-1}^{2,2} + \frac{3}{2} h^2 P_{k-1}^{2,3} + \frac{1}{2}h^3 P_{k-1}^{3,3} + Q_{k-1}^{1,2}$$

$$P_{k,k-1}^{1,3} = P_{k,k-1}^{3,1} = P_{k-1}^{1,3} + hP_{k-1}^{2,3} + \frac{1}{2} h^2 P_{k-1}^{3,3} + Q_{k-1}^{1,3}$$

$$P_{k,k-1}^{2,2} = P_{k,k-1}^{2,2} + 2hP_{k-1}^{2,3} + h^2 P_{k-1}^{3,3} + Q_{k-1}^{2,2}$$

$$P_{k,k-1}^{2,3} = P_{k,k-1}^{3,2} = P_{k-1}^{2,3} + hP_{k-1}^{3,3} + Q_{k-1}^{2,3}$$

$$P_{k,k-1}^{3,3} = P_{k-1}^{3,3} + Q_{k-1}^{3,3}$$

mit den Anfangswerten

$$P_0 = Var(\vec{x}_0)$$

Die Kalman Matrix G nach

$$G_k = P_{k,k-1} C_k^T (C_k P_{k,k-1} C_k^T + R_k)^{-1}$$

berechnet sich dann zu:

$$G_k = \left( P_{k,k-1}^{3,3} + r_k \right)^{-1} \begin{bmatrix} P_{k,k-1}^{1,3} \\ P_{k,k-1}^{2,3} \\ P_{k,k-1}^{3,3} \end{bmatrix}$$

$$(5.18)$$

damit wird die Matrix $P_{k,k}$ der zweiten Momente der Schätzfehler $P_{k,k} = (I-G_kC_k)\, P_{k,k-1}$ zu:

$$P_{k,k} = P_{k,k-1} - \left( \frac{1}{P_{k,k-1}^{3,3} + r_k} \cdot \begin{bmatrix} P_{k,k-1}^{1,3}{}^2 & P_{k,k-1}^{1,3} P_{k,k-1}^{2,3} & P_{k,k-1}^{1,3} P_{k,k-1}^{3,3} \\ P_{k,k-1}^{2,3} P_{k,k-1}^{1,3} & P_{k,k-1}^{2,3}{}^2 & P_{k,k-1}^{2,3} P_{k,k-1}^{3,3} \\ P_{k,k-1}^{3,3} P_{k,k-1}^{1,3} & P_{k,k-1}^{3,3} P_{k,k-1}^{2,3} & P_{k,k-1}^{3,3}{}^2 \end{bmatrix} \right)$$

Der rekursive Kalman Algorithmus ist damit: mit $\hat{x}_{0,0} = E(x_0)$.

Da die Matrizen $P_{k,k}$, $P_{k,k-1}$ und $G_k$ nicht von den Meßwerten abhängen, können sie off-line berechnet werden. Für die aktuelle Schätzung wird dann nur noch die Gleichung (5.20) on-line berechnet.

$$\begin{bmatrix} \hat{x}_{k,k}^1 \\ \hat{x}_{k,k}^2 \\ \hat{x}_{k,k}^3 \end{bmatrix} = \begin{bmatrix} 1 & h & \dfrac{h^2}{2} - G_k^1 \\ 0 & 1 & h - G_k^2 \\ 0 & 0 & 1 - G_k^3 \end{bmatrix} \begin{bmatrix} \hat{x}_{k-1,k-1}^1 \\ \hat{x}_{k-1,k-1}^2 \\ \hat{x}_{k-1,k-1}^3 \end{bmatrix} + \begin{bmatrix} G_k^1 \\ G_k^2 \\ G_k^3 \end{bmatrix} \bar{a}_k$$

$$(5.20)$$

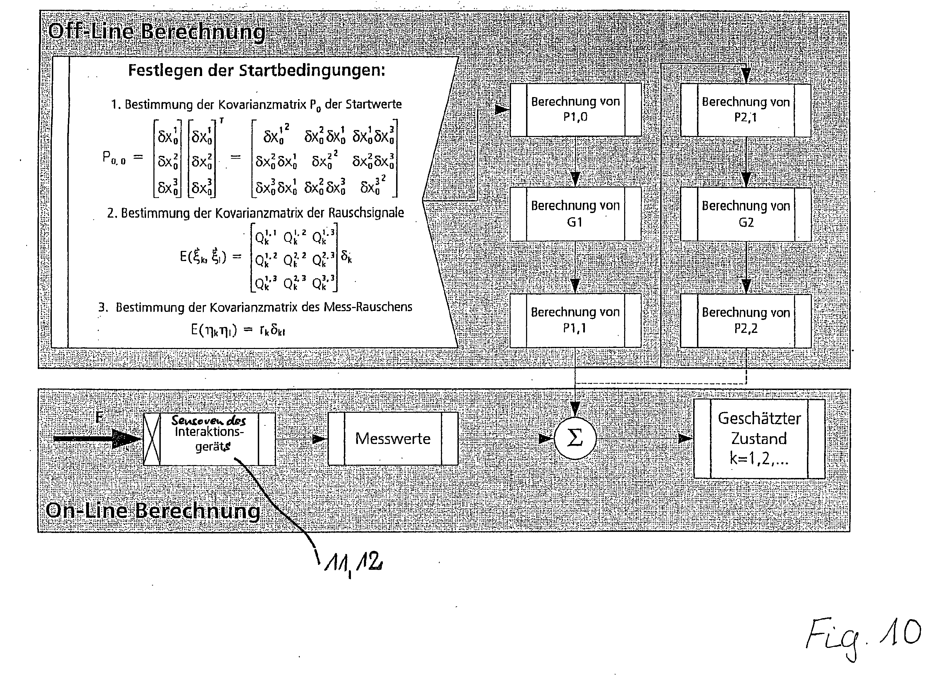

Eine derartige on-line-Berechnung zur Ermittlung des geschätzten Zustandes ist in Figur 10 noch einmal dargestellt, wobei die dort verwendeten Bezeichnungen den in den obigen Gleichungen verwendeten Zeichnungen entsprechen.

Zusammenfassend läßt sich feststellen, daß die erfindungsgemäße Visualisierungseinrichtung und die erfindungsgemäße Eingabevorrichtung für alle Navigationskonzepte eingesetzt werden kann, bei denen die Interaktionen auf Relativbewegungen zurückgeführt werden können. Dieses System ermöglicht isometrische Interaktion in allen Freiheitsgraden. Wie bei allen differenzialen Interaktionssystemen müssen für die Objektmanipulation andere Metaphern, wie z.B. Spracheingabe oder kombiniertes Kopf- und Handtracking eingesetzt werden.

Ergänzend kann je nach eingesetztem Sensorverbund und den damit erreichten Genauigkeiten eine differenziale Objektselektion auf folgende Weise durchgeführt werden. Beim Einleiten einer Interaktion wird eine Repräsentation des Interaktionsgerätes an einer angenommenen Position relativ zur Kopfposition eingeblendet. Die Koordinaten dieses Objektes orientieren sich an den antropometrischen Daten aus. Der Benutzer bewegt diese Repräsentation dann mit einem konstanten Offset zwischen der realen Hand und der visuellen Darstellung. Die Interaktionen müssen dabei zeitlich so kurz sein, daß die Meßwerte der Visualisierung nicht davonlaufen.

**Patentansprüche**

1. Handgehaltene, kabellose Eingabevorrichtung (4) zur Erzeugung und Übermittlung von Orts-, Lageund/oder Bewegungsdaten zur Navigation und Manipulation in Systemen der virtuellen Realität mit mindestens zwei Inertialsensoren (11, 12) zur Erfassung von analogen Werten der Beschleunigung und/oder der Winkelgeschwindigkeit der Eingabevorrichtung (4) mit einer ersten Frequenz,
einem integrierten Signalprozessor (13) zum Auswerten der von den Inertialsensoren (11, 12) ausgegebenen analogen Daten und Erzeugung digitaler differentialer Daten bezüglich der Bewegung der Eingabevorrichtung (4) mit einer niedrigen Frequenz, die geringer ist als die erste Frequenz,
einer Kommunikationsvorrichtung (17) zum kabellosen Senden der digitalen Daten niedriger Frequenz sowie einer Auslösevorrichtung (14) , die die Inertialsensoren (11, 12) einschaltet.

2. Eingabevorrichtung (4) nach dem vorhergehenden Anspruch, **dadurch gekennzeichnet, daß** die Auslösevorrichtung (14) die Inertialsensoren (11, 12) für einen vorbestimmten Zeitraum einschaltet.

3. Eingabevorrichtung (4) nach Anspruch 1, **dadurch gekennzeichnet, daß** die Auslösevorrichtung (14) die Inertialsensoren (11, 12) im eingeschalteten Zustand hält, solange sie betätigt wird.

4. Eingabevorrichtung (4) nach einem der vorhergehenden Ansprüche, **dadurch gekennzeichnet, daß** als Inertialsensoren (11, 12)
ein bis drei Beschleunigungssensoren (11', 11'', 11''') zum Erfassen und Ausgeben von Beschleunigungswerten bezüglich einer oder mehrerer Achsen eines kartesischen Koordinatensystems mit einer bestimmten ersten Frequenz und/oder
ein bis drei Winkelgeschwindigkeitssensoren (12', 12'', 12''') zum Erfassen und Ausgeben von Winkelgeschwindigkeitswerten bezüglich einer oder mehrerer der Achsen des kartesischen Koordinatensystems mit-einer bestimmten zweiten Frequenz
vorgesehen sind.

5. Eingabevorrichtung (4) nach einem der vorhergehenden Ansprüche, **dadurch gekennzeichnet, daß** als Inertialsensor (11, 12) ein Kreiselsensor, ein Erdmagnetfeldsensor oder ein Beschleunigungssensor vorgesehen ist.

6. Eingabevorrichtung (4) nach einem der vorhergehenden Ansprüche, **dadurch gekennzeichnet, daß** mit dem Signalprozessor (13) differentiale Daten mit einer Frequenz erzeugbar sind, die der Bildfrequenz einer Bilddarstellungsvorrichtung entspricht.

7. Eingabevorrichtung (4) nach einem der vorhergehenden Ansprüche, **dadurch gekennzeichnet, daß** als Inertialsensor (11) ein Beschleunigungssensor verwendet wird und der Signalprozessor (13) aus den gemessenen Werten des Sensors in Ruhe der Eingabevorrichtung (4) die Lage der Eingabevorrichtung (4) ermittelt.

8. Eingabevorrichtung (4) nach einem der vorhergehenden Ansprüche, **dadurch gekennzeichnet, daß** der Signalprozessor (8) die von den Inertialsensoren (11, 12) ausgegebenen analogen Daten einfach oder zweifach integriert.

9. Eingabevorrichtung (4) nach dem vorhergehenden Anspruch, **dadurch gekennzeichnet, daß** die Integration mit Beginn-der Betätigung der Auslösevorrichtung (14) beginnt.

10. Eingabevorrichtung (4) nach einem der beiden vorhergehenden Ansprüche, **dadurch gekennzeichnet, daß** die Anfangswerte der Winkel und der Ortskoordinaten zu Beginn jeder Betätigung der Auslösevorrichtung (14) zu 0 festgesetzt wird.

11. Eingabevorrichtung (4) nach einem der beiden vorhergehenden Ansprüche, **dadurch gekennzeichnet, daß** der Signalprozessor (13) die Winkelgeschwindigkeit integriert und als Winkelwert ausgibt.

12. Eingabevorrichtung (4) nach dem vorhergehenden Anspruch, **dadurch gekennzeichnet, daß** für die Integration der Anfangswert des Winkels zu 0° festgesetzt wird.

**13.** Eingabevorrichtung (4) nach einem der vorhergehenden Ansprüche, **dadurch gekennzeichnet, daß** er als Inertialsensor (11, 12) einen Magnetfeldsensor aufweist, der den Anfangswinkel mit Bezug auf das Erdmagnetfeld bestimmt.

**14.** Eingabevorrichtung (4) nach einem der vorhergehenden Ansprüche, **dadurch gekennzeichnet, daß** die Kommunikationsvorrichtung (17) einen Radiowellensender enthält.

**15.** Eingabevorrichtung (4) nach einem der vorhergehenden Ansprüche, **dadurch gekennzeichnet, daß** die Kommunikationsvorrichtung (17) die Daten in ASCII-Format sendet.

**16.** Visualisierungseinrichtung (1) zur Navigation und Manipulation in Systemen der virtuellen Realität mit einer Bilddarstellungsvorrichtung (2,3) zur Visualisierung von Daten und Bildern in Abhängigkeit von vorgegebenen Orts-, Lageund/oder Bewegungsdaten sowie einer Eingabevorrichtung (4) zur Erzeugung und Übermittlung der genannten Orts-, Lage- und/oder Bewegungsdaten nach einem der vorhergehenden Ansprüchen

Fig. 1

Fig. 2

EP 1 276 073 A2

Fig. 3

EP 1 276 073 A2

Aktionsfläche $19$

Beschleunigungssensor ($x^i$, $y^i$) $11''$

Beschleunigungs-
sensor2 ($z''^i$, $z'''^i$) $11'$

Taster $14$

Gyroskop
$\psi^i$ $12'$

Gyroskop
$\phi^i$ $12''$

Gyroskop
$\theta^i$ $12''''$

$\alpha$

$y^i$

$g$

$4$

$18$

Fig. 4

Fig. 5

| | $\vec{x^P}, \vec{\Omega^P}, \phi^i, \theta^i$ a | $\vec{x^P}, \vec{\Omega^P}, \Delta\phi^i, \Delta\psi^i$ b | $\vec{x^P}, \vec{\Omega^P}, \phi^i, \theta^i, \Delta\psi^i$ c | $\vec{x^P}, \vec{\Omega^P}, \vec{\Delta x^i}, \vec{\Delta\Omega^i}$ |
|---|---|---|---|---|
| Selektion durch Kollision | ○ | ○ | ○ | ●● d |
| Selektion durch die Sichtpyramide | ●● | ●● | ●●● | ●●● |
| Selektion durch eine virtuelle Lanze | ● | ● | ● | ●● |
| Selektion durch Spracheingabe | ●● | ●● | ●●● | ●●● |

Fig. 6

EP 1 276 073 A2

Fig. 7

Fig. 8

Fig. 9

## Off-Line Berechnung

**Festlegen der Startbedingungen:**

1. Bestimmung der Kovarianzmatrix $P_0$ der Startwerte

$$P_{0,0} = \begin{bmatrix} \delta x_0^1 \\ \delta x_0^2 \\ \delta x_0^3 \end{bmatrix} \begin{bmatrix} \delta x_0^1 \\ \delta x_0^2 \\ \delta x_0^3 \end{bmatrix}^T = \begin{bmatrix} {\delta x_0^1}^2 & \delta x_0^2 \delta x_0^1 & \delta x_0^1 \delta x_0^3 \\ \delta x_0^2 \delta x_0^1 & {\delta x_0^2}^2 & \delta x_0^2 \delta x_0^3 \\ \delta x_0^3 \delta x_0^1 & \delta x_0^2 \delta x_0^3 & {\delta x_0^3}^2 \end{bmatrix}$$

2. Bestimmung der Kovarianzmatrix der Rauschsignale

$$E(\vec{\xi}_k \, \vec{\xi}_l) = \begin{bmatrix} Q_k^{1,1} & Q_k^{1,2} & Q_k^{1,3} \\ Q_k^{1,2} & Q_k^{2,2} & Q_k^{2,3} \\ Q_k^{1,3} & Q_k^{2,3} & Q_k^{3,3} \end{bmatrix} \delta_k$$

3. Bestimmung der Kovarianzmatrix des Mess-Rauschens

$$E(\eta_k \eta_l) = r_k \delta_{kl}$$

Berechnung von P1,0

Berechnung von P2,1

Berechnung von G1

Berechnung von G2

Berechnung von P1,1

Berechnung von P2,2

## On-Line Berechnung

F

Sensoren des Interaktions-geräts

Messwerte

$\Sigma$

Geschätzter Zustand k=1,2,...

$\Lambda 1, \Lambda 2$

Fig. 10